# EUROPÄISCHE PATENTANMELDUNG

(11) **EP 2 058 093 A2**
(43) Veröffentlichungstag der Anmeldung: **13.05.2009**
(21) Anmeldenummer: 08019503.5
(22) Anmeldetag: 07.11.2008
(51) Int. Cl.: B27B 25/02, B65G 39/02, F16C 13/00

(54) **Rundholz-Längstransportvorrichtung**

(30) Priorität: 12.11.2007 DE 102007054237
(71) Anmelder: Holtec GmbH & Co.KG, 53940 Hellenthal (DE)
(72) Erfinder: Pützer, Alfred, 53940 Hellenthal (DE)
(74) Vertreter: Plöger, Jan Manfred

(57) **Zusammenfassung**

Die Erfindung betrifft eine Rundholz-Längstransportvorrichtung mit einem Gestell (12), mindestens einer Transportrolle (14) zum Transportieren von Rundholz (20) und einer Lagerwelle (22), an der die Transportrolle (14) um eine Drehachse (A) drehbar gelagert ist. Erfindungsgemäß ist vorgesehen, dass die Transportrolle (14) über eine radiale Dämpfungsvorrichtung (34) an der Lagerwelle (22) gelagert ist, wobei die Dämpfungsvorrichtung (34) mehrere Dämpfelemente (38) umfasst, die jeweils einen gummielastischen Dämpfer (50) aufweisen, und wobei die Dämpfelemente (38) die Transportrolle (14) in radialer Richtung (R) bezüglich der Lagerwelle (22) führen.

## Beschreibung

Die Erfindung betrifft eine Rundholz-Längstransportvorrichtung mit einem Gestell, mindestens einer Transportrolle zum Transportieren von Rundholz und einer Lagerwelle, an der die Transportrolle um eine Drehachse drehbar gelagert ist.

Eine derartige Rundholz-Längstransportvorrichtung ist aus der DE 299 04 359 bekannt. Auf Rundholz-Längstransportvorrichtungen werden beispielsweise mit einem Kran Rundhölzer, insbesondere entastete Baumstämme, aufgelegt und zu einer nachfolgenden Verarbeitungseinrichtung transportiert. Bestehende Rundholz-Längstransportvorrichtungen haben den Nachteil, dass sie massive Gestelle besitzen müssen, da es ansonsten bei Dauerbelastung zu Rissen kommen kann. Derartige Gestelle sind jedoch aufwendig in der Herstellung und nur schwer zu transportieren.

Aus der DE 24 01 308 A1 ist eine Förderrolle bekannt, die ein zentrales Befestigungsteil und ein Umfangsteil besitzt, zwischen denen ein flexibles Glied angeordnet ist. Nachteilig an einer derartigen Förderrolle ist, dass sie für die rauen Anforderungen einer Rundholz-Längstransportvorrichtung nicht geeignet ist.

Aus der DE 35 32 624 A1 ist eine Treibscheibe, insbesondere für den Antrieb von Aufzügen, bekannt. Bei der Treibscheibe sind zwischen einem Außenrand, in dem die Aufzugseile geführt sind, und der Nabe elastische Elemente angeordnet. Nachteilig ist auch an dieser Treibscheibe, dass sie für den Einsatz in einer Rundholz-Längstransportvorrichtung nicht geeignet ist, da axiale Kräfte zu ihrer Zerstörung führen würden.

Aus der DE 90 07 247 ist eine Transportwalze für Maschinen zur Bearbeitung von Holz gekannt, bei der der Walzenkörper radial und axial beweglich auf der Nabe angeordnet ist. Wie oben ausgeführt, sind derartige Transportwalzen für den Einsatz in Rundholz-Längsvorrichtungen nicht geeignet.

Aus der DE 1 793 931 ist eine Niederdruckwalze bekannt, die in radialer Richtung besonders weich und in Verdrehrichtung besonders steif ist. Nachteilig ist auch hier, dass axiale Kräfte nicht abgefangen werden können, so dass die Niederdruckwalze zur Verwendung in einer Rundholz-Längstransportvorrichtung ungeeignet ist.

Der Erfindung liegt die Aufgabe zugrunde, eine Rundholz-Längstransportvorrichtung vorzuschlagen, die mit einem leichteren Gestell auskommt bzw. bei der die Lebensdauer des Gestells erhöht ist.

Die Erfindung löst das Problem durch eine Rundholz-Längstransportvorrichtung mit den Merkmalen von Anspruch 1.

Der Erfindung liegt die Erkenntnis zugrunde, dass die Alterung des Gestells durch selten auftretende Spitzenlasten verringert wird. Die Dämpfungsvorrichtung wirkt als Puffer zwischen der Transportrolle und dem Gestell und dämpft Spitzenbelastungen. Fällt beispielsweise ein gefrorener und damit wenig elastischer Baumstamm aus einer unüblich großen Höhe auf die Transportrolle, so entsteht eine Kraftspitze, die in ihrem Maximalwert deutlich kleiner ist als ohne Dämpfungsvorrichtung. Eine derartige Kraftspitze entsteht auch, wenn ein unüblich schwerer Baumstamm über einen Seitförderer aus einer stets gleich bleibenden, vorgegebenen Höhe auf die Vorrichtung fällt. Dass sich durch eine Dämpfungsvorrichtung der Transportrolle die Lebensdauer des Gestelles verlängert, ist deshalb überraschend, weil derartige Spitzenbelastungen selten auftreten und die Rundholz-Längstransportvorrichtung darauf ausgelegt ist, auch solche Spitzenlasten abzufangen.

Im Rahmen der vorliegenden Beschreibung wird unter einer Transportrolle insbesondere eine Vorrichtung verstanden, die ausgebildet ist, um eine Gewichtskraft des Rundholzes aufzunehmen und um das Rundholz in eine im Wesentlichen horizontale Richtung zu befördern. Für einen besseren Griff kann die Transportrolle beispielsweise eine strukturierte, Rillen aufweisende Oberfläche besitzen. Unter einer radialen Dämpfungsvorrichtung wird insbesondere jede Vorrichtung verstanden, die eine Weiterleitung von Stößen von der Transportrolle auf die Lagerwelle dämpft, die eine zur Drehachse senkrechte Kraftkomponente besitzen. Die Dämpfungsvorrichtung ist damit zugleich elastisch.

Vorteilhaft an der erfindungsgemäßen Rundholz-Längstransportvorrichtung ist, dass sie wartungsfreundlich ist. Durch die Dämpfungsvorrichtung sinkt die Belastung der Transportrolle, der Lagerwelle und des Gestells. Aus diesem Grund müssen die Lager in größeren Wartungsabständen auf ihr Funktionieren untersucht werden. Es entfällt zudem weitgehend die Notwendigkeit, das Gestell zu inspizieren. Die Dämpfungsvorrichtung stellt bevorzugt zugleich eine Sollbruchstelle bzw. eine Überlastsicherung dar.

Vorteilhaft ist zudem die kompakte Bauweise. Die Dämpfungsvorrichtung wird bevorzugt in der Transportrolle angeordnet, so dass kein zusätzlicher Bauraum notwendig ist. Im Gegenteil kann Bauraum deshalb eingespart werden, weil das Gestell schlanker konstruiert werden kann. Vorteilhafterweise erhöht die erfindungsgemäße Dämpfungsvorrichtung damit die Robustheit und die Zuverlässigkeit der Rundholz-Längstransportvorrichtung. Es hat sich überraschenderweise zudem gezeigt, dass die Lagerschmierung der Lagerwelle weniger fehleranfällig ist. Ein Grund ist, dass Spitzenlasten zu einer Deformation von Lagerkörpern der Lager führen, wodurch zwischen den Lagern angeordnetes Fett aus dem Lager gedrückt wird. Ein weiterer Grund ist, dass durch eine Verminderung der Spitzenlasten weniger Vibrationen entstehen, die Lagerfett aus dem Lager heraus treiben. Die erfindungsgemäße Dämpfungsvorrichtung führt damit zudem zu größeren Wartungsintervallen für die Lager der Transportrolle.

In einer bevorzugten Ausführungsform umfasst die Dämpfungsvorrichtung mehrere Dämpfelemente, die insbesondere jeweils einen gummielastischen Dämpfer aufweisen. Vorteilhaft hieran ist, dass Kräfte, die auf die Transportrolle wirken und eine senkrecht zur Drehachse wirkende Kraftkomponente aufweisen, auf mehrere Dämpfelemente verteilt werden. Insbesondere sind mehr als 4, 5, 6, 7, 8 oder mehr Dämpfelemente vorhanden. Ein Versagen oder übermäßiges Verschleißen eines Dämpfelements führt damit nicht zu einem Versagen der Rundholz-Längstransportvorrichtung. Die Dämpfelemente weisen bevorzugt einen Durchmesser von weniger als der Hälfte, insbesondere weniger als ein Drittel eines Transportrollen-Durchmesser mit der Transportrolle auf. Sie sind dadurch leicht herstellbar.

Bevorzugt weisen alle Dämpfelemente den gleichen Abstand von der Lagerwelle auf. Beispielsweise sind sie auf einem Kreis angeordnet, dessen Mittelpunkt mit der Drehachse im Wesentlichen zusammenfällt. Es ist zudem bevorzugt, dass die Dämpfelemente zumindest gruppenweise in Form eines regelmäßigen Vierecks angeordnet sind, dessen geometrischer Schwerpunkt im Wesentlichen mit der Drehachse zusammenfällt.

In der erfindungsgemäßen Ausführungsform führen die Dämpfelemente die Transportrolle in radialer Richtung bezüglich der Lagerwelle. Das Merkmal, dass die Transportrolle in radialer Richtung geführt wird, bedeutet, dass eine axiale Bewegung der Transportrolle bezüglich ihrer Lagerwelle unterdrückt wird. Es hat sich gezeigt, dass so eine besonders gute Dämpfungswirkung der Dämpfungsvorrichtung bei gleichzeitig großer Lebensdauer erreichbar ist und ein unkontrolliertes Auslenken der Transportrolle verhindert wird.

In einer Ausführungsform sind die Dämpfelemente einerseits an einer Transportrollen-Stirnfläche, die auch als Transportrollen-Stirnblech bezeichnet werden kann, der Transportrolle und andererseits an einer Flanschscheibe der Lagerwelle befestigt, wobei die Transportrollen-Stirnfläche und die Flanschscheibe senkrecht zur Drehachse verlaufen und wobei die Dämpfelemente jeweils zwei Gleitflächen zum Gleiten an der Transportrollen-Stirnfläche und/oder dem Flanschkragen aufweisen. Die Gleitflächen sind so ausgebildet, dass sie die Transportrollen-Stirnfläche und/oder den Flanschkragen zwischen sich einschließen und sich relativ zu diesem bewegen, wenn eine radiale Kraft auf die Transportrolle wirkt. Das heißt, dass die Gleitflächen Kraftkomponenten aufnehmen, die axial bezüglich der Drehachse auf die Transportrolle wirken. Radial bezüglich der Drehachse auf die Transportrolle wirkende Kräfte wirken auf die Dämpfelemente, die diese Radialkraft dämpfen bzw. puffern. Die Flanschscheibe ist ausgebildet, um an einem Flanschkragen der Lagerwelle montiert zu werden.

Besonders vorteilhaft sind die Dämpfer aus Gummi, wobei die Dämpfer bevorzugt durch eine Gummischeibe gebildet sind. Derartige Gummischeiben sind leicht und kostengünstig herstellbar und einfach auf Verschleiß zu untersuchen. Die Gummischeibe hat eine kreisförmige Außen-Mantelfläche und eine kreisförmige InnenMantelfläche, die eine gemeinsame Längsachse besitzen, die parallel zu der Drehachse verläuft.

Bevorzugt ist die Dämpfungsvorrichtung so ausgebildet, dass eine radial zur Lagerwelle auf die Transportrolle wirkende Kraft von 10 kN eine Verschiebung bzw. einen Versatz der Transportrolle von weniger als 10 mm, insbesondere weniger als 5 mm, relativ zur Lagerrolle bewirkt. Es hat sich herausgestellt, dass eine höhere Elastizität der Dämpfungsvorrichtung kaum weitere Vorteile bringt und statt dessen ein Wippen des Rundholzes auf der Transportrolle eintreten kann. Letzteres ist unerwünscht.

Um eine besonders einfache Wartung zu erreichen, sind die Dämpfelemente lösbar an der Transportrolle befestigt, insbesondere angeschraubt.

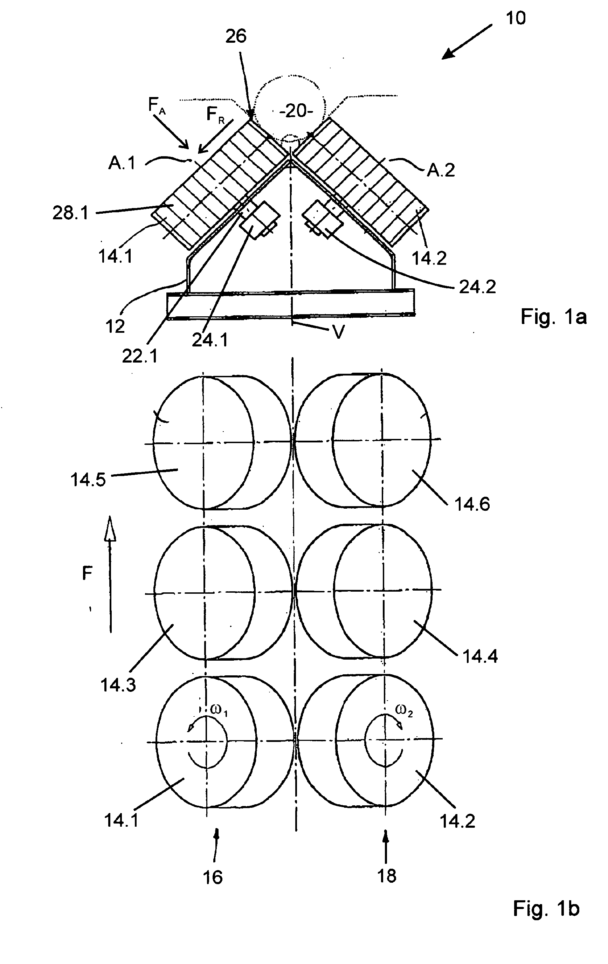

Im Folgenden wird eine Ausführungsform der Erfindung mit Hilfe der beigefügten Zeichnungen näher erläutert. Dabei zeigt
- Figur 1 a: einen Querschnitt einer erfindungsgemäßen Rundholz-Längstransport vorrichtung,
- Figur 1 b: eine schematische Ansicht von oben auf die Rundholz-Längstransport vorrichtung,
- Figur 2: eine perspektivische Ansicht einer erfindungsgemäßen Transportrolle zur Verwendung in der Rundholz-Längstransportvorrichtung nach den Figuren 1 a und 1b,
- Figur 3: die Transportrolle gemäß Figur 2, die mit einer Abdeckung abgedeckt ist,
- Figur 4: eine Querschnittsansicht der Transportrolle gemäß den Figuren 2 und 3,
- Figur 5: einen Längsschnitt durch die Transportrolle gemäß der Figuren 2 bis 4,
- Figur 6: eine perspektivische Ansicht einer Flanschscheibe, an der die Dämpfelemente der Transportrolle gemäß den Figuren 2 bis 5 befestigt sind und
- Figur 7: einen Querschnitt durch ein Dämpfelement.

Figur 1 zeigt eine Rundholz-Längstransportvorrichtung 10, die ein Gestell 12 und sechs Transportrollen 14.1, 14.2, ... 14.6 umfasst. Die Transportrollen 14 sind in zwei Reihen 16 bzw. 18 angeordnet und gegenläufig in Drehrichtungen ω₁ bzw. ω₂ antreibbar (vgl. Figur 1b). Die Transportrollen 14 sind angeordnet, um Rundholz 20 (vgl. Figur 1 a) in Richtung einer Förderrichtung F (vgl. Figur 1b) zu bewegen. Alle Transportrollen 14.1, ... 14.6 sind gleichartig aufgebaut. Es wird der Einfachheit halber daher im Folgenden nur die Transportrolle 14.1 näher erläutert. Bezugszeichen ohne Zählsuffix bezeichnen stets das jeweilige Objekt als solches.

Wie Figur 1 a zeigt, ist die Transportrolle 14.1 mittels einer Lagerwelle 22.1 um eine Drehachse A.1 an dem Gestell 12 gelagert. Die Drehachse A verläuft dabei unter einem Winkel von im Wesentlichen 45° zu einer Vertikalen V. Die Lagerwelle 22.1 ist mittels eines Wälzlagers 24.1 gelagert.

Die zweite Transportrolle 14.2 ist um eine Drehachse A.2 gelagert, die mit der Drehachse A.1 einen Winkel beispielsweise zwischen 80° und 100° und im vorliegenden Fall von im Wesentlichen 90° bildet. Die jeweiligen Drehachsen der Transportrollen 14.1, 14.3. und 14.5 sind parallel zueinander, auf gleiche Weise sind die Drehachsen der Transportrollen 14.2, 14.4 und 14.6 parallel zueinander. Dadurch bilden die Transportrollen 14 eine Rundholzaufnahmerinne 26 für das Rundholz 20.

Die Transportrolle 14 besitzt eine im Wesentlichen zylinderförmige Mantelfläche 28.1. Gemäß einer alternativen Ausführungsform ist die Mantelfläche 28.1 konisch mit sich nach außen verjüngendem Durchmesser.

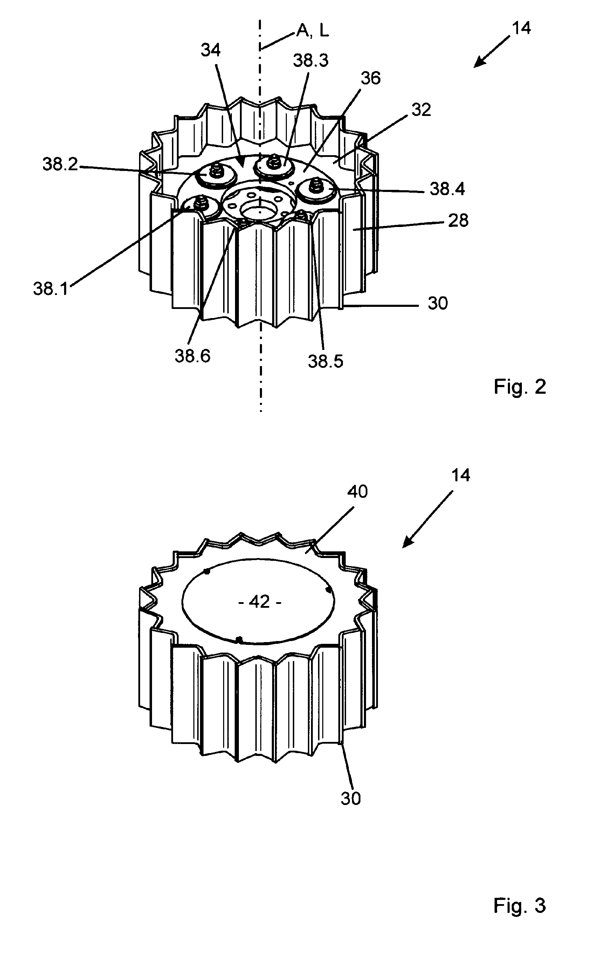

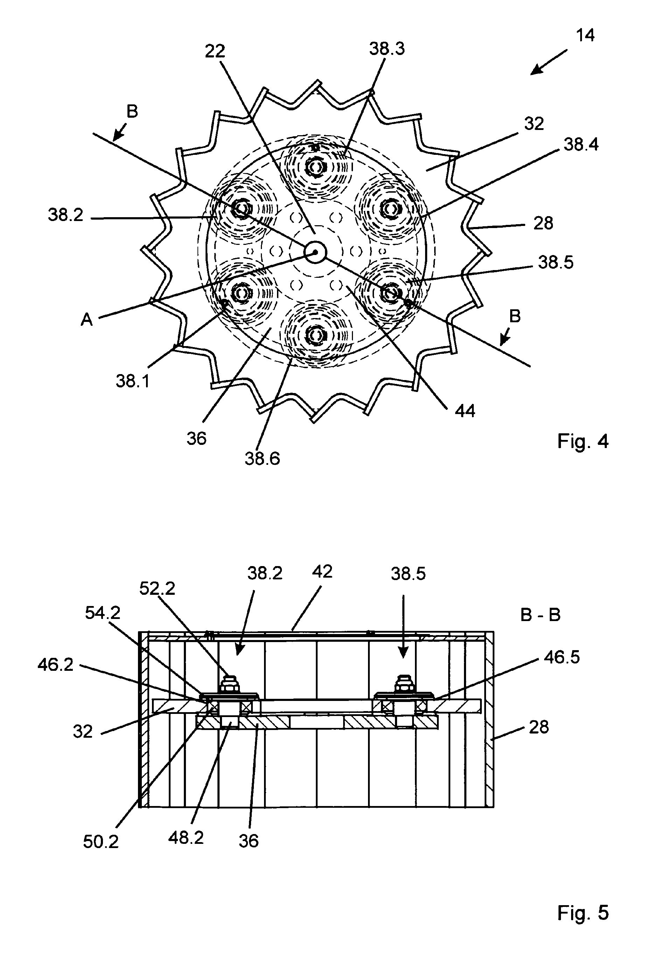

Figur 2 zeigt eine Transportrolle 14. Es ist zu erkennen, dass die Mantelfläche 28 Vorschubkanten 30 besitzt, die den Griff zwischen Transportrolle 14 und dem Rundholz verbessern. Radial innen an der Mantelfläche 28 ist eine Transportrollen-Stirnfläche 32 in Form eines Blechs angeschweißt, das senkrecht zu der Drehachse A verläuft. An der Transportrollen-Stirnfläche 32 ist eine Dämpfungsvorrichtung 34 montiert, die die Transportrollen-Stirnfläche 32 mit einer Flanschscheibe 36 verbindet. Die Flanschscheibe 36 ist ausgebildet, um mit einem in Figur 4 eingezeichneten Flanschkragen 44 der Lagerwelle 22 (vgl. Figur 1 a) verschraubt zu werden. Wie Figur 2 zeigt, umfasst die Dämpfungsvorrichtung 34 sechs Dämpfelemente 38.1, 38.2, ... 38.6, die alle gleich aufgebaut sind und weiter unten detailliert beschrieben werden.

Figur 3 zeigt eine Abdeckung 40 der Transportrolle 14, die einen Revisionsdeckel 42 umfasst. Die Abdeckung 40 ist von innen an die Mantelfläche 28 angeschweißt und schützt die Dämpfungsvorrichtung 34 (in Figur 3 nicht sichtbar) vor Schmutz. Zum Warten der Dämpfungsvorrichtung 34 kann der Revisionsdeckel 42 abgenommen und anschließend reversibel mit dem Rest der Abdeckung 40 wieder verbunden werden.

Figur 4 zeigt einen Querschnitt durch die Transportrolle 14, wobei der Flanschkragen 44 der Lagerwelle 22 zu erkennen ist. Die Dämpfelemente 38.1, ... 38.6 bilden ein gleichseitiges Sechseck, dessen Schwerpunkt mit der Drehachse A übereinfällt.

Figur 5 zeigt einen Querschnitt bezüglich der Linie B-B gemäß Figur 4. Es ist zu erkennen, dass die Transportrollen-Stirnfläche 32 durch ein Grobblech gebildet ist. Im Folgenden wird exemplarisch für alle Dämpfelemente 38 die Befestigung des Dämpfelements 38.1 beschrieben. Die Transportrollen-Stirnfläche 32 weist eine Bohrung 46.2 auf, die von einem Bolzen 48.2 des Dämpfelements 38.2 durchgriffen wird. Der Bolzen 48.2 ist an der Flanschscheibe 36 angeschweißt und radial von einem Dämpfer 50.2 in Form einer Gummischeibe umgeben.

Der Dämpfer 50.2 hat eine Dicke H, die im Wesentlichen einer Dicke der Transportrollen-Stirnfläche 32 entspricht und dessen Außendurchmesser D_{außen} ist gleich dem Innendurchmesser Dᵢₙₙₑₙ der Bohrung 46.2. Der Dämpfer 50.2 ist damit in die Bohrung 46.2 allseitig bündig eingepasst. Der Dämpfer 52.2 hat zudem einen Innendurchmesser, der gleich dem Außendurchmesser des Bolzens 48.2 ist. Dadurch ist der Dämpfer 50.2 spielfrei an der Transportrollen-Stirnfläche 32 und der Flanschscheibe 36 angebracht. Der Bolzen 48.2 ist an seinem der Flanschscheibe 36 abgewandten Ende gewindet und trägt dort eine Mutter 52.2, die eine Vorspannung auf eine Spannscheibe 54.2 aufbringt.

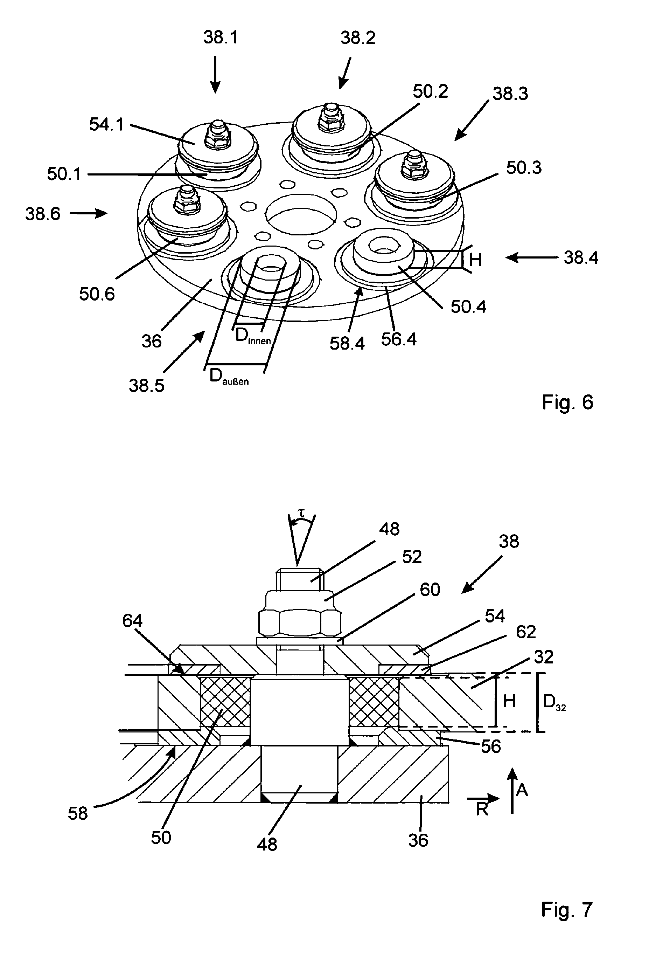

Figur 6 zeigt die Flanschscheibe 36 mit den Dämpfelementen 38, wobei bei dem Dämpfelement 38.4 die Spannscheibe und der Bolzen entfernt worden sind, so dass der Dämpfer 50.4 zu sehen ist. Auf der der Flanschscheibe 36 zugewandten Seite steht der Dämpfer 50.4 in Kontakt mit einer Gleitscheibe 56.4, die dem Dämpfer 50.4 eine Gleitfläche 58.4 zuwendet.

Figur 7 zeigt ein Dämpfelement 38. Es ist zu erkennen, dass die Dicke H des Dämpfers 50 um einen kleinen Betrag kleiner ist als die Dicke D₃₂ der Transportrollen-Stirnfläche 32. Der Bolzen 48 weist in dem Bereich, in dem er von dem Dämpfer 50 umgeben ist, eine Durchmesservergrößerung auf.

Über die Mutter 52 und eine Unterlegscheibe 60 wird auf die Spannscheibe 54 eine Kraft ausgeübt, die auf einen Gleitring 62 aus Rotguss wirkt. Der Gleitring 62 besitzt eine der Transportrollen-Stirnfläche 32 zugewandte Gleitfläche 64, so dass das Dämpfelement 38 in einer radialen Richtung R an der Transportrollen-Stirnfläche 32 gleiten kann. Auf der Flanschscheibe 36 gleitet die Gleitfläche 58 an der Gleitscheibe 56. Damit wird eine Bewegung in axialer Richtung, das heißt, in Richtung der Drehachse A, und ein Kippen um einen Kippwinkel γ verhindert.

Wird, wie in Figur 1a angedeutet, das Rundholz 20 aus großer Höhe in die Rundholzaufnahmerinne fallen gelassen, so wirkt eine Radialkraft F_{R} auf die Transportrolle 14.1. Dadurch verschiebt sich eine Längsachse L (vgl. Figur 2) parallel relativ zu der Drehachse A der Lagerwelle 22. Zwischen der Längsachse L und der Drehachse A entsteht ein Versatz. Die Dämpfer 50 sind so ausgebildet, dass der Versatz bei unter 10 mm liegt, wenn eine Radialkraft F_{R} von 10 kN bzw. 1 t wirkt. Der Versatz ist beispielsweise größer als 1,5 mm. Durch das Aufprallen des Rundholzes 20 (vgl. Figur 1a) werden die entstehenden Kräfte daher gedämpft, so dass auf die Wälzlager 24 eine Kraft wirkt, die in ihrem Maximum deutlich kleiner als diejenige, die ohne die Dämpfungsvorrichtung 34 entstehen würde.

### Bezugszeichenliste

- 10: Rundholz Längstransportvorrichtung
- 12: Gestell
- 14: Transportrolle
- 16: Reihe
- 18: Reihe
- 20: Rundholz
- 22: Lagerwelle
- 24: Wälzlager
- 26: Rundholzaufnahmerinne
- 28: Mantelfläche
- 30: Vorschubkante
- 32: Transportrollen-Stirnfläche
- 34: Dämpfungsvorrichtung
- 36: Flanschscheibe
- 38: Dämpfelement
- 40: Abdeckung
- 42: Revisionsdeckel
- 44: Flanschkragen
- 46: Bohrung
- 48: Bolzen
- 50: Dämpfer
- 52: Mutter
- 54: Spannscheibe
- 56: Gleitscheibe
- 58: Gleitfläche
- 60: Unterlegscheibe
- 62: Gleitring
- 64: Gleitfläche
- A: Achse
- D: Dicke
- D_{außen}: Außendurchmesser
- Dᵢₙₙₑₙ: Innendurchmesser
- F: Förderrichtung
- F_{R}: Radialkraft
- F_{A}: Axialkraft
- H: Höhe
- L: Längsachse
- r: Radialrichtung
- V: Vertikale
- ω: Drehrichtung
- γ: Kippwinkel

## Patentansprüche

1. Rundholz-Längstransportvorrichtung mit
(a) einem Gestell (12),
(b) mindestens einer Transportrolle (14) zum Transportieren von Rundholz (20) und
(c) einer Lagerwelle (22), an der die Transportrolle (14) um eine Drehachse (A) drehbar gelagert ist,
**dadurch gekennzeichnet, dass**
(d) die Transportrolle (14) über eine radiale Dämpfungsvorrichtung (34) an der Lagerwelle (22) gelagert ist,
(e) wobei die Dämpfungsvorrichtung (34) mehrere Dämpfelemente (38) umfasst, die jeweils einen gummielastischen Dämpfer (50) aufweisen, und
(f) wobei die Dämpfelemente (38) die Transportrolle (14) in radialer Richtung (R) bezüglich der Lagerwelle (22) führen.

2. Rundholz-Längstransportvorrichtung nach Anspruch 1, **dadurch gekennzeichnet, dass** die Dämpfelemente (38) alle den gleichen Abstand von der Lagerwelle (22) haben.

3. Rundholz-Längstransportvorrichtung nach einem der vorstehenden Ansprüche, **dadurch gekennzeichnet, dass** die Dämpfelemente (38) zumindest gruppenweise in Form eines regelmäßigen Vielecks angeordnet sind, dessen geometrischer Schwerpunkt im Wesentlichen mit der Drehachse
(A) zusammenfällt.

4. Rundholz-Längstransportvorrichtung nach einem der vorstehenden Ansprüche, **dadurch gekennzeichnet, dass**
- die Dämpfelemente (38) einerseits an einer Transportrollen-Stirnfläche (32) der Transportrolle (14) und andererseits an einer Flanschscheibe (36) zum Befestigen an einem Flanschkragen (44) der Lagerwelle (22) befestigt sind,
- wobei die Transportrollen-Stirnfläche (32) und die Flanschscheibe (36) senkrecht zur Drehachse (A) verlaufen und
- wobei die Dämpfelemente (38) jeweils zwei Gleitflächen (58, 64) zum Gleiten an der Transportrollen-Stirnfläche (32) und/oder der Flanschscheibe (36), wenn die Transportrolle (14) sich radial zur Lagerwelle (22) bewegt, aufweisen.

5. Rundholz-Längstransportvorrichtung nach einem der vorstehenden Ansprüche, **dadurch gekennzeichnet, dass** die gummielastische Dämpfer (50) aus Gummi bestehen, insbesondere Gummischeiben sind.

6. Rundholz-Längstransportvorrichtung nach einem der vorstehenden Ansprüche, **dadurch gekennzeichnet, dass** die Dämpfungsvorrichtung (34) so ausgebildet ist, dass eine radial zur Lagerwelle (22) auf die Transportrolle (14) wirkende Kraft (F_{R}) von 10 kN eine Verschiebung der Transportrolle (14) von weniger als 10 mm, insbesondere von weniger als 5 mm, relativ zur Lagerwelle (22) bewirkt.

7. Rundholz-Längstransportvorrichtung nach einem der vorstehenden Ansprüche, **gekennzeichnet durch** mindestens zwei Transportrollen (14) mit jeweils einer Lagerwelle (22), an der die Transportrollen (14.1, 14.2, 14.3 14.4, 14.5, 14.6) um eine Lagerwelle (22) drehbar gelagert sind, wobei die Lagerwellen (22) unter einem Winkel von im Wesentlichen 90° zueinander angeordnet sind.

8. Rundholz-Längstransportvorrichtung nach einem der vorstehenden Ansprüche, **dadurch gekennzeichnet, dass** die Dämpfelemente (38) lösbar befestigt sind, insbesondere angeschraubt.
